**Europäisches Patentamt**

**European Patent Office**

**Office européen des brevets**

(19)

(11) **EP 1 146 763 A2**

(12) **EUROPÄISCHE PATENTANMELDUNG**

(43) Veröffentlichungstag:
**17.10.2001 Patentblatt 2001/42**

(51) Int Cl.<sup>7</sup>: **H04Q 7/38**

(21) Anmeldenummer: **01108842.4**

(22) Anmeldetag: **09.04.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **13.04.2000 AT 6402000**

(71) Anmelder: **Siemens AG Österreich**
**1211 Wien (AT)**

(72) Erfinder:
• **Conte, Marco**
  **1120 Wien (AT)**
• **rammer, Josef, Dr.**
  **1100 Wien (AT)**
• **Schlapansky, Ferdinand**
  **1090 Wien (AT)**

(74) Vertreter: **Peham, Alois, Dipl.-Ing. et al**
**Postfach 22 13 17**
**80503 München (DE)**

(54) **Verfahren zur Zulassung von Verbindungen in Radiotelekommunikationsnetzen**

(57) Es wird ein Verfahren zur Zulassung von Verbindungen in einem Radiotelekommunikationsnetz angegeben , bei dem mittels Multiplex-Verfahren gleichzeitig mehrere Verbindungen über jeweils eine Übertragungsstrecke geführt werden, wobei zur Entscheidung ueber die Zulassung einer neuen Verbindung auf einer Uebertragungsstrecke die Kenngrößen dieser Uebertragungsstrecke ermittelt und beurteilt werden.

Fig.1

**EP 1 146 763 A2**

**Beschreibung**

Die Erfindung betrifft ein Verfahren zur Zulassung von Verbindungen in einem Radiotelekommunikationsnetz, bei dem mittels Multiplex-Verfahren gleichzeitig mehrere Verbindungen über jeweils eine Übertragungsstrecke geführt werden.

Der Aufbau und die Verwaltung von Radiokommunikationsnetzen erfordert hohe Investitionen und Aufwände. Dies gilt insbesondere dann, wenn das Netz Kommunikationssatelliten umfaßt. Diese sind bei Kommunikationsnetzen mit großem geografischen Abdeckungsbereich von Vorteil, ihre Installation und der Betrieb sind aber mit hohen Kosten verbunden. Für einen wirtschaftlichen Betrieb muss daher eine möglichst hohe Auslastung des Netzes erfolgen. Bei Netzen, bei denen die Datenübertragung nach dem Zeitmultiplex - Verfahren (TDM = Time Division Multiplexing) erfolgt, ist die Zuteilung der Zeitschlitze bei Diensten mit fester Bandbreite, wie z.B. Sprachdiensten verhältnismäßig einfach. Bei der Übertragung von Multimedia- und Internetdaten besteht allerdings ein stark variierender Bandbreitenbedarf. Für diese Anwendungen kann die gewünschte hohe Auslastung der Übertragungsstrecke nur durch eine aufwendige, dynamische Zuordnung der verfügbaren Rahmen und Zeitschlitze erfolgen.

Der Erfindung liegt daher die Aufgabe zugrunde, ein Verfahren anzugeben, mit dem die Zulassung von Verbindungen so erfolgt, dass die Auslastung des Radiokommunikationsnetzes ein Maximum und damit die Zurückweisung von Verbindungsanforderungen ein Minimum erreicht, und die Wahrscheinlichkeit eines Datenverlustes einen vorgegebenen Wert nicht übersteigt.

Dies geschieht erfindungsgemäß mit einem Verfahren zur Zulassung von Verbindungen in einem Radiotelekommunikationsnetz, bei dem zur Entscheidung ueber die Zulassung einer neuen Verbindung auf einer Uebertragungsstrecke die folgenden Kenngrößen dieser Uebertragungsstrecke ermittelt und beurteilt werden:

- die mittlere Datenrate aller aktuell bestehenden Verbindungen auf der Uebertragungsstrecke;
- die Varianzen der Datenraten aller aktuell bestehenden Verbindungen auf der Uebertragungsstrecke;
- der Kapazitaet der Uebertragungsstrecke; und
- der die maximal tolerierbare Datenverlustwahrscheinlichkeit auf der Uebertragungsstrecke charakterisierende Parameter $\alpha$.

Vorteilhaft ist es, wenn zur Entscheidung ueber die Zulassung einer neuen Verbindung auf einer Uebertragungsstrecke zusaetzlich die voraussichtliche mittlere Datenrate und die voraussichtliche Varianz der Datenrate der neuen Verbindung herangezogen wird.

Günstig ist es, wenn die Zulassungsbedingung fuer eine neue Verbindung auf einer Übertragungstrecke

$$\sum_{Verbindungen\ i} MDR_i + DRM \leq MaxDR$$

lautet, wobei ueber alle aktuell existierenden Verbindungen dieser Übertragungsstrecke summiert wird, und

$MDR_i$ .... die mittlere Datenrate einer aktuell existierenden Verbindung $i$ dieser Übertragungsstrecke bezeichnet, und weiterhin gilt

$DRM = \alpha \cdot \sqrt{var(link)}$, wobei var($link$) die Varianz der Datenrate des Uebertragungsweges bezeichnet, und $MaxDR$ die Kapazitaet des Uebertragungsweges darstellt.

Eine vorteilhafte Ausgestaltung des Verfahrens erhält man, wenn die Zulassungsbedingung fuer eine neue Verbindung

$$\sum_{Verbindungen\ i} MDR + DRM \leq MaxDR$$

lautet, wobei die Summe ($\Sigma$) ueber alle aktuell existierenden Verbindungen unter Einschluss der gewuenschten neuen Verbindung gebildet wird.

Vorteilhaft ist es weiterhin, wenn die Varianz der Datenrate des Uebertragungswegs (var) wie folgt ermittelt wird:

$$\mathrm{var}(link) = \sum_{Verbindungen\ i} MDR_i \cdot (PDR_i - MDR_i)\text{, wobei}$$

$PDR_i$ (Peak Data Rate) die maximale Datenrate einer aktuell existierenden Verbindung $i$ bedeutet.

Günstig ist es, wenn der Parameter $\alpha$ bestimmt wird gemäß:

$$\frac{1}{\sqrt{2\pi}} \int_{\alpha}^{\infty} \exp(-x^2/2)\,dx = \varepsilon,$$

wobei $\varepsilon$ die maximal tolerierbare Datenverlustwahrscheinlichkeit auf der Uebertragungsstrecke bedeutet.

Eine weitere günstige Ausgestaltung des Verfahrens besteht darin, daß der Parameter $\alpha$ aus der folgenden Gleichung bestimmt wird:

$$\alpha = \frac{N_{\max} - N}{\sqrt{N}} \cdot \sqrt{\frac{p}{1-p}},$$

wobei

$N_{\max} = MaxDR/\langle MDR_i\rangle$, (dabei bezeichnet $\langle.\rangle$ den Mittelwert einer Größe),

$p = \dfrac{\langle MDR_i\rangle}{\langle PDR_i\rangle}$, und

$N$ aus der Bedingung bestimmt wird, dass die kumulative Binomialfunktion

$$B^c(N,k) = \sum_{j=0}^{k} \binom{N}{j} p^j (1-p)^{N-j}$$

an der Stelle $k = N_{\max} \cdot p - 1$ den Wert $1-\varepsilon$ annimmt.

Die Erfindung wird anhand von Figuren näher erläutert. Es zeigen beispielhaft:

Fig. 1 eine schematische Darstellung des Zeitmultiplex Verfahrens,
Fig. 2 die effektive Datenrate einer Zeitmultiplex - Verbindung,
Fig. 3 eine Darstellung von Binomialverteilung und kumulierter B Binomialverteilung.

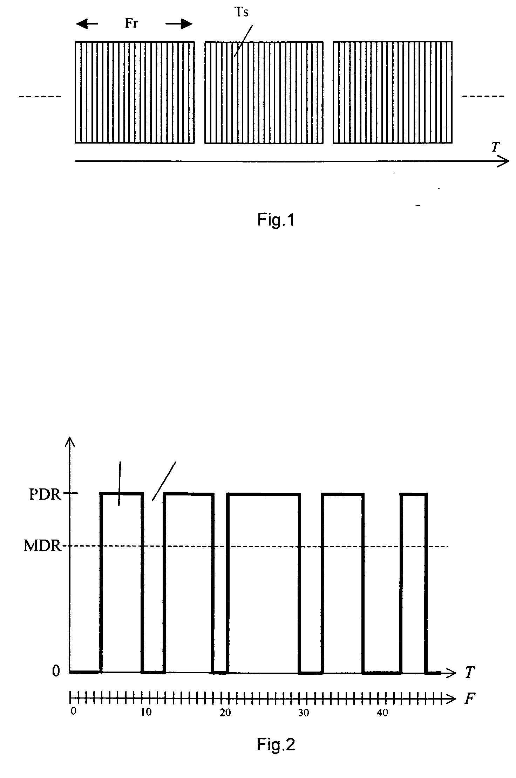

Bei dem in Fig. 1 dargestellten Zeitmultiplex - Verfahren (TDM = Time Division Multiplexing) erfolgt die Datenübertragung der einzelnen Verbindungen in einem definierten Multiplexrahmen, der in eine bestimmte Zahl von Zeitschlitzen unterteilt ist.

Jeder Benutzer bekommt einen oder mehrere bestimmte Zeitschlitze innerhalb des Übertragungsrahmens zugeordnet, während der er Senden bzw. Empfangen kann. Ein Übertragungskanal ist durch die Position des oder der Zeitschlitze innerhalb des Übertragungsrahmens eindeutig identifiziert. Diese Zeitschlitze eines Kanals sind immer synchron in Bezug auf den Übertragungsrahmen. Daher auch die Bezeichnung synchrones Zeitmultiplex.

Die Zuteilung der Zeitschlitze ist bei Diensten mit fester Bandbreite, wie z.B. Sprachdiensten verhältnismäßig einfach. Bei der Übertragung von Multimedia- und Internetdaten besteht allerdings ein stark variierender Bandbreitenbedarf. Für diese Anwendungen kann die gewünschte hohe Auslastung der Übertragungsstrecke nur durch eine aufwendige, dynamische Zuordnung der verfügbaren Rahmen und Zeitschlitze erfolgen.

Bei einem beispielhaften Radiotelekommunikationsnetz mit Kommunikationssatelliten werden nach dem erfindungsgemäßen Verfahren die verfügbaren Rahmen und Zeitschlitze den Benutzern (Kommunikationssatelliten und Satelliten-Erdefunkstationen) in einem zweistufigen Prozeß zugeordnet.

In der ersten Stufe wird die Anforderung durch eine Satelliten-Erdefunkstation akzeptiert und ein "Connection Admission Control" Verfahren angestoßen. Im zweiten Schritt werden die erforderlichen Resourcen, die für die Übertragung erforderlichen Rahmen und Zeitschlitze belegt.

Die Belegung beruht auf dem aktuellen Auslastungszustand der Zeitschlitze, im Fall von Überbelegung kann dabei ein Prioritätsschema zur Anwendung kommen. Bei einfachen Verfahren gehen in dem Fall, daß keine Verbindung zustande kommt, die entsprechenden Daten verloren.

Fig. 2 zeigt den Verlauf eines Datenstromes bei einem beispielhaften Verfahren (ON/OFF Datenstrom), bei dem einer Verbindung in einem gepulsten Betrieb eine Anzahl von Zeitschlitzen PDR zugewiesen wird. Das Verhältnis von belegten Rahmen zu nicht genutzten Rahmen wird an die benötigte mittlere Datenrate MDR der Verbindung angepaßt.

Für eine optimale Auslastung der Übertragungswege ist nun die Zulassung von Verbindungen so zu gestalten, daß der Datendurchsatz möglichst hoch wird, ohne daß die Wahrscheinlichkeit eines Datenverlustes einen vorgegebenen Wert übersteigt.

Dies geschieht nach dem erfindungsgemäßen Verfahren, welches im folgenden näher erläutert wird:
Für eine Verbindung nach dem Verfahren gemäß Fig. 2 gilt für die Varianz der Datenrate

$$\mathrm{var}(call\ i) = MDR_i \cdot (PDR_i - MDR_i)$$

wobei i die Verbindung indiziert, MDR die mittlere und PDR die maximale Datenrate der jeweiligen Verbindung bezeichnet.

Erfindungsgemäß wird die Bedingung

$$\sum_{all\ calls\ i} MDR_i + DRM \le MaxDR$$

als Grundlage für die Entscheidung über die Zulassung einer neuen Verbindung herangezogen. Der Begriff MaxDR kennzeichnet dabei die Kapazität der Übertragungsstrecke, DRM (Data Rate Margin) ist wie folgt festgelegt:

$$DRM = \alpha \cdot \sigma(link) = \alpha \cdot \sqrt{\mathrm{var}(link)}\ \text{(Data Rate Margin)}\ ,$$

wobei
$\sigma(link)$ die Standardabweichung der Datenrate der Übertragungsstrecke bezeichnet.

Für den Parameter $\alpha$ gilt:

$$\alpha = \frac{N_{max} - N}{\sqrt{N}} \cdot \sqrt[n]{\frac{p}{1-p}}$$

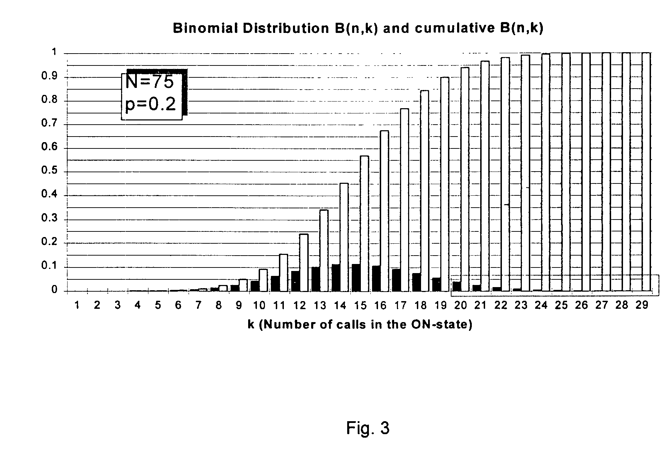

mit $N_{max} = MaxDR/\langle MDR_i \rangle$, und $p = \langle MDR_i \rangle / \langle PDR_i \rangle$.
Der Parameter N , die Anzahl der zulässigen Verbindungen wird aus der kumulativen Binomialverteilung $B^c(N,k)$ gemäß Fig.3 aus der Bedingung $k = N_{max} \cdot p - 1 = 1 - \varepsilon$ ermittelt, wobei $\varepsilon$ die maximal tolerierbare Datenverlustwahrscheinlichkeit darstellt.

Bei zeitlich stark variierenden Werten $<MDR_i>$ und $<PDR_i>$ ist es möglich und sinnvoll den Parameter $\alpha$ adaptiv zu gestalten, um die Datenverlustwahrscheinlichkeit $\varepsilon$ dennoch konstant zu halten. Dabei wird $\alpha$ zu geeigneten Zeitpunkten entweder unter Verwendung der aktuellen $MDR_i$ und $PDR_i$ Werte neu berechnet oder aufgrund der erhaltenen Verlustwahrscheinlichkeit $\varepsilon$ adjustiert.

**Patentansprüche**

1. Verfahren zur Zulassung von Verbindungen in einem Radiotelekommunikationsnetz, wobei mittels Multiplex-Verfahren gleichzeitig mehrere Verbindungen über jeweils eine Übertragungsstrecke geführt werden, **dadurch gekennzeichnet, dass** zur Entscheidung ueber die Zulassung einer neuen Verbindung auf einer Uebertragungsstrecke die folgenden Kenngrößen dieser Uebertragungsstrecke ermittelt und beurteilt werden:

   - die mittlere Datenrate aller aktuell bestehenden Verbindungen auf der Uebertragungsstrecke;

- die Varianzen der Datenraten aller aktuell bestehenden Verbindungen auf der Uebertragungsstrecke;
- der Kapazitaet der Uebertragungsstrecke; und
- der die maximal tolerierbare Datenverlustwahrscheinlichkeit auf der Uebertragungsstrecke charakterisierende Parameter $\alpha$.

**2.** Verfahren nach Anspruch 1,**dadurch gekennzeichnet, dass** zur Entscheidung ueber die Zulassung einer neuen Verbindung auf einer Uebertragungsstrecke zusaetzlich die voraussichtliche mittlere Datenrate und die voraussichtliche Varianz der Datenrate der neuen Verbindung herangezogen wird.

**3.** Verfahren nach Anspruch 1 oder 2, **dadurch gekennzeichnet, dass** die Zulassungsbedingung fuer eine neue Verbindung auf einer Übertragungstrecke

$$\sum_{Verbindungen\ i} MDR_i + DRM \leq MaxDR$$

lautet,
wobei ueber alle aktuell existierenden Verbindungen dieser Übertragungsstrecke summiert wird, und
$MDR_i$ .... die mittlere Datenrate einer aktuell existierenden Verbindung i dieser Übertragungsstrecke bezeichnet, und weiterhin gilt
$DRM = \alpha \cdot \sqrt{var(link)}$, wobei var(*link*) die Varianz der Datenrate des Uebertragungsweges bezeichnet, und *MaxDR* die Kapazitaet des Uebertragungsweges darstellt.

**4.** Verfahren nach Anspruch 2, **dadurch gekennzeichnet, dass** die Zulassungsbedingung fuer eine neue Verbindung

$$\sum_{Verbindungen\ i} MDR + DRM \leq MaxDR$$

lautet, wobei
die Summe ($\Sigma$) ueber alle aktuell existierenden Verbindungen unter Einschluss der gewuenschten neuen Verbindung gebildet wird.

**5.** Verfahren nach einem der Ansprueche 3 oder 4, **dadurch gekennzeichnet, dass** die Varianz der Datenrate des Uebertragungswegs (var) wie folgt ermittelt wird:

$$var(link) = \sum_{Verbindungen\ i} MDR_i \cdot (PDR_i - MDR_i),$$

wobei
$PDR_i$ (Peak Data Rate) die maximale Datenrate einer aktuell existierenden Verbindung *i* bedeutet.

**6.** Verfahren nach einem der Ansprueche 3 oder 4, **dadurch gekennzeichnet, dass** der Parameter $\alpha$ bestimmt wird gemäß:

$$\frac{1}{\sqrt{2\pi}} \int_{\alpha}^{\infty} \exp(-x^2/2)\,dx = \varepsilon$$

wobei $\varepsilon$ die maximal tolerierbare Datenverlustwahrscheinlichkeit auf der Uebertragungsstrecke bedeutet.

**7.** Verfahren nach einem der Ansprueche 3 oder 4, **dadurch gekennzeichnet, dass** der Parameter $\alpha$ aus der folgenden Gleichung bestimmt wird:

$$\alpha = \frac{N_{\max} - N}{\sqrt{N}} \cdot \sqrt{\frac{p}{1-p}},$$

wobei

$N_{\max} = MaxDR/\langle MDR_i \rangle$,
$p = \frac{\langle MDR_i \rangle}{\langle PDR_i \rangle}$, und
$N$ aus der Bedingung bestimmt wird, dass die kumulative Binomialfunktion

$$B^c(N,k) = \sum_{j=0}^{k} \binom{N}{j} p^j (1-p)^{N-j}$$

an der Stelle $k = N_{\max} \cdot p - 1$ den Wert $1-\varepsilon$ annimmt.

Fig.1

Fig.2

Fig. 3